# FASCICULE DE BREVET EUROPEEN

(11) **EP 0 908 339 B1**
(45) Date de publication et mention de la délivrance du brevet: **05.03.2003**
(21) Numéro de dépôt: 98118911.1
(22) Date de dépôt: 07.10.1998
(51) Int. Cl.: B60H 1/00

(54) **Dispositif de commande d'installation de climatisation d'un véhicule automobile, à personnalisation de réglages par auto-apprentissage**
Steueranordnung für Fahrzeugklimaanlagen, mit selbstlernenden Benutzerpräferenzen
Control device for automotive climatization systems, with setting of personnal preferences by self-learning

(30) Priorité: 09.10.1997 FR 9712612
(43) Date de publication de la demande: 14.04.1999
(73) Titulaire: VALEO CLIMATISATION, 78321 La Verrière (FR)
(72) Inventeur: Gach, Béatrice, 78960 Voisins Le Bretonneux (FR)

(56) Documents cités:
- EP-A- 0 781 672
- US-A- 5 511 724
- US-A- 5 579 994
- PATENT ABSTRACTS OF JAPAN vol. 016, no. 260 (P-1369), 12 juin 1992 & JP 04 062605 A (AISIN SEIKI CO LTD;OTHERS: 01), 27 février 1992

## Description

L'invention concerne les dispositifs de commande électronique d'installation de climatisation de véhicule automobile, notamment à mode de fonctionnement automatique.

Elle concerne plus particulièrement les dispositifs tels que décrits dans le document JP-A-04 062 605, du type comprenant :
- des moyens permettant de détecter des jeux de paramètres physiques, parmi lesquels au moins des températures à l'intérieur et à l'extérieur de l'habitacle (mais il pourra également s'agir du rayonnement solaire),
- des moyens de saisie permettant à un passager de sélectionner des jeux de paramètres aérothermiques de consigne à l'intérieur de l'habitacle, comme par exemple la température interne et le mode de distribution de l'air climatisé,
- un module de calcul capable de déterminer, à partir d'un jeu de paramètres physiques détectés et d'un jeu de paramètres de consigne, un jeu de réglages de l'installation, dits "en cours",
   une interface-installation pour instaurer un tel jeu de réglages, et
- des moyens de reconnaissance propres à recevoir une donnée d'entrée fournie par un passager en vue de déterminer si ladite donnée appartient à une liste mémorisée.

On entend par réglages en cours, l'ensemble des réglages permettant à l'installation de fonctionner à un instant donné. De tels réglages sont recalculés périodiquement, généralement après chaque réception d'un jeu de paramètres physiques détectés.

Les véhicules automobiles équipés de ce type d'installation de climatisation à mode de fonctionnement automatique sont fréquemment conduits par plusieurs personnes qui ne réagissent pas de la même façon dans un environnement aérothermique donné. Ces personnes (conducteurs) auront donc chacune des préférences particulières en matière d'aérothermie, et par conséquent elles auront tendance à choisir presque toujours les mêmes paramètres aérothermiques de consigne pour gérer l'air climatisé dans l'habitacle, lorsqu'elles rencontrent des conditions aérothermiques équivalentes.

Or, dans les installations de climatisation, le jeu de réglages, qui permet de faire fonctionner l'installation à un instant donné, est généralement mémorisé de sorte qu'en cas d'arrêt du moteur ou de mise hors de fonctionnement de l'installation, le jeu puisse être rétabli lors de l'utilisation suivante. Il en résulte qu'en cas de changement de conducteur, les réglages de l'installation qui sont automatiquement instaurés ne conviennent généralement pas au nouveau conducteur, qui doit alors saisir les paramètres de consigne qui lui conviennent.

Un but de l'invention est donc de procurer un dispositif de commande d'une installation de climatisation qui permet de remédier à l'inconvénient précité.

L'invention propose à cet effet un dispositif du type décrit en introduction, dans lequel on prévoit un module d'apprentissage capable, en cas d'une telle appartenance et d'une sélection par le passager d'un jeu de paramètres de consigne, de stocker dans une mémoire d'apprentissage, sous forme d'un multiplet, le dernier jeu de paramètres physiques détectés, le jeu de paramètres de consigne sélectionné et la donnée d'entrée.

Cela permet de constituer progressivement une table d'apprentissage contenant les paramètres de consigne choisis par les différents passagers associés aux différentes données d'entrée de la liste et les paramètres physiques détectés au moment des sélections de jeux de paramètres de consigne par l'utilisateur-passager.

Selon une autre caractéristique de l'invention, lorsqu'un passager fournit une donnée d'entrée appartenant à la liste, le module d'apprentissage est capable d'extraire de la mémoire d'apprentissage au moins un premier multiplet comprenant cette donnée d'entrée et un jeu de paramètres physiques détectés sensiblement identique au dernier jeu de paramètres physiques détectés. Le jeu de paramètres de consigne compris dans ce premier multiplet extrait est alors fourni au module de calcul pour que celui-ci puisse déterminer le jeu de réglages qui correspond au jeu de paramètres physiques détectés et au jeu de paramètres de consigne sélectionnés par le module d'apprentissage.

De la sorte, les réglages de l'installation qui sont automatiquement instaurés par le dispositif, sur demande d'un passager dont la donnée d'entrée (ou "signature") a été reconnue, sont ceux qui avaient été instaurés lors d'une utilisation précédente dans des conditions aérothermiques externe et/ou interne similaires.

Dans un mode de réalisation particulier, le module d'apprentissage peut être agencé pour extraire de la mémoire d'apprentissage au moins un second multiplet comprenant une donnée d'entrée identique à celle fournie par le passager ainsi qu'un jeu de paramètres physiques comparable à celui du premier multiplet extrait, puis à déterminer un jeu de paramètres de consigne moyens à partir des jeux de paramètres de consigne des multiplets extraits, pour fournir au module de calcul le jeu de paramètres de consigne moyens de sorte qu'il détermine le jeu de réglages qui correspond au jeu de paramètres physiques détectés et au jeu de paramètres de consigne moyens. Cela permet de tenir compte d'éventuels ajustements de consigne effectués par un passager donné pour des paramètres physiques détectés donnés.

On entend ici par comparables, des paramètres physiques qui sont approximativement les mêmes. On pourra par exemple fixer des plages de tolérance pour chaque paramètre physique d'un jeu, plages dans lesquelles un paramètre sera considéré comme comparable à un paramètre mémorisé.

Avantageusement, le module d'apprentissage peut mémoriser sous forme d'un multiplet, dans la mémoire d'apprentissage, la donnée d'entrée fournie, le dernier jeu de paramètres physiques détectés et le jeu de paramètres de consigne moyens.

Préférentiellement, chaque multiplet est mémorisé dans la mémoire d'apprentissage en correspondance d'une position temporelle représentative de son instant de mémorisation par rapport aux multiplets qui comprennent la même donnée d'entrée que la sienne. Ainsi, à chaque donnée d'entrée est associée une sous liste ordonnée chronologiquement de paramètres physiques et de paramètres de consigne, permettant de connaître l'évolution des consignes choisies par le passager correspondant, selon les paramètres physiques détectés.

Lorsque tel est le cas, et lorsque l'on se trouve dans le mode de réalisation particulier, il est préférable que le second multiplet extrait possède une position temporelle proche de celle du premier multiplet secondaire extrait, de sorte que les ajustements pris en compte ne soient pas trop anciens.

Préférentiellement, les jeux de paramètres aérothermiques de consigne qui peuvent être saisis comprennent au moins la température à l'intérieur de l'habitacle. Mais, selon les options d'autres paramètres aérothermiques de consigne pourront faire l'objet de saisie, comme par exemple le mode de distribution d'air climatisé à l'intérieur de l'habitacle.

Les moyens de reconnaissance pourront être réalisés sous diverses formes. Ils pourront par exemple, et de préférence, comprendre un ou plusieurs organe(s) de saisie-identification de type touche de contact, ou bien comprendre un module de détection de fréquences vocales, ou bien encore comprendre un module de détection de codes ou de formes de clé.

Ainsi, dans le cas d'un unique organe de saisie-identification, du type, par exemple, à émission d'impulsion par pression (ou plus généralement actionnement), des nombres de pressions successives différents permettent de différencier des données d'entrée différentes, et par conséquent des passagers différents.

Dans le cas de plusieurs organes de saisie, le seul actionnement de l'organe fournit la donnée d'entrée correspondante.

Dans le cas d'un module de détection de fréquences vocales, il suffira, par exemple, à un passager dont la fréquence vocale est mémorisée sous forme de message (donnée d'entrée appartenant à la liste), d'émettre (vocalement) son message pour que le dispositif instaure un jeu de réglages qui correspond au jeu de paramètres de consigne (moyens ou non) associé audit message et au dernier jeu paramètres physiques détectés.

Dans le cas d'un module de détection de codes de type alphanumérique, il suffira, par exemple, à un passager dont le code est mémorisé (donnée d'entrée appartenant à la liste) de fournir ledit code pour que le dispositif instaure le jeu de réglages qui correspond au jeu de paramètres de consigne (moyens ou non) associé audit code et au dernier jeu de paramètres physiques détectés.

Dans le cas d'un module de détection de formes de clés, il suffira, par exemple, à un passager d'introduire sa clé dans le contacteur du véhicule pour que le dispositif instaure le jeu de réglages qui correspond à la forme de sa clé (donnée d'entrée appartenant à la liste) et aux paramètres physiques détectés.

On pourra également prévoir dans la mémoire de programmation, lors de l'assemblage du véhicule, et cela quel que soit le type de module de reconnaissance utilisé, des jeux de paramètres de consigne dits "par défaut", en nombre égal au nombre de jeux de paramètres de consigne pouvant être stockés dans la mémoire de programmation.

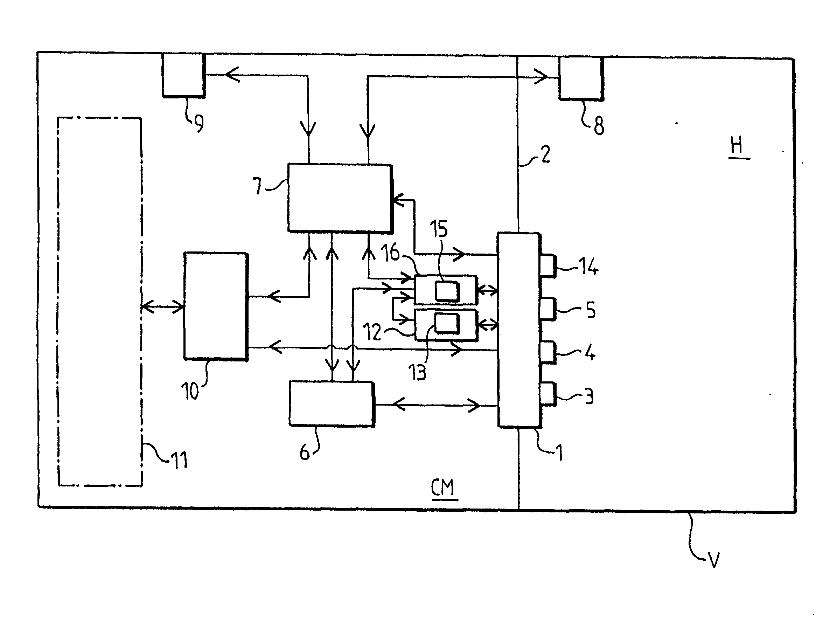

Dans la description qui suit, faite à titre d'exemple, on se réfère à l'unique dessin annexé qui illustre schématiquement un dispositif de commande d'une installation de climatisation selon l'invention.

Une telle installation de climatisation étant parfaitement connue de l'homme de l'art, il est donc inutile d'en décrire tous les éléments, ainsi que leur fonctionnement. Il est néanmoins utile, pour la suite de la description, de préciser qu'elle est gérée par un dispositif de commande comprenant au moins des organes de saisie, une interface-installation, un module de calcul de réglages et une mémoire, et qu'un passager logé dans l'habitacle H d'un véhicule V équipé d'une telle installation peut choisir, à l'aide de ces organes de saisie, la température interne TCint, ainsi que généralement le débit d'air climatisé et le mode de distribution d'air climatisé MD.

Pour ce faire, le véhicule V comprend un boîtier de saisie 1, généralement logé dans la planche de bord 2 du véhicule, et comportant une multiplicité d'organes de saisie, comme par exemple des boutons-pression à impulsions tels que des touches digitales. Dans l'exemple illustré sur l'unique figure, on prévoit notamment une première touche 3 permettant de saisir (choisir) la température à l'intérieur de l'habitacle (TCint) et une seconde touche digitale 4 permettant, par exemple, de saisir le mode de distribution d'air MD dans ce même habitacle. La température interne et le mode de distribution d'air sont appelés paramètres aérothermiques de consigne à l'intérieur de l'habitacle, ou de façon plus concise paramètres de consigne.

Dans l'exemple illustré, le boîtier de saisie 1 comprend également une touche de mise en fonctionnement de l'installation de climatisation 5.

Lorsqu'un utilisateur souhaite que certains paramètres aérothermiques de consigne (lesquels forment un jeu) soient instaurés dans l'habitacle, il actionne les organes de saisies 3, 4 correspondants. Ces paramètres sont alors stockés dans une mémoire 6, de sorte qu'en cas d'arrêt du moteur ou de l'installation les réglages associés puissent être réinstaurés lors de l'utilisation suivante de l'installation.

Ces paramètres aérothermiques de consigne choisis sont également adressés à un module de calcul 7 auquel sont connectés au moins deux capteurs de paramètres physiques, parmi lesquels au moins deux capteurs de température 8 et 9 destinés respectivement à mesurer la température à l'intérieur de l'habitacle (Tint) et la température à l'extérieur de ce même habitacle (Text). Ces paramètres physiques détectés forment un jeu. Les capteurs de température peuvent être complétés, par exemple, par un capteur de rayonnement solaire ou par tout autre capteur, connu de l'homme de l'art, permettant d'affiner les réglages de l'installation.

Connaissant le jeu de paramètres physiques détectés et le jeu de paramètres de consigne sélectionnés, le module de calcul 7 peut déterminer, grâce à des automates programmés qu'il comprend, un jeu de réglages de l'installation permettant de satisfaire le plus rapidement possible le passager-utilisateur, lequel est de préférence le conducteur.

Le module de calcul 7 adresse alors à une interface-installation 10 le jeu de réglages ainsi déterminé, de sorte que les éléments réglables 11 de l'installation fonctionnent selon ces réglages particuliers.

Le dispositif de commande selon l'invention offre un mode de fonctionnement dit par apprentissage, permettant à plusieurs utilisateurs du véhicule de disposer chacun de réglages adaptés à leur organisme selon les conditions aérothermiques régnant à l'intérieur et à l'extérieur de l'habitacle. Bien entendu, cela s'applique également à un unique utilisateur désirant disposer de plusieurs types de réglages différents.

Pour qu'un utilisateur puisse voir instaurés les réglages qui lui conviennent habituellement, il n'a qu'à fournir (ou adresser) au dispositif de commande une donnée dite d'entrée.

Pour ce faire, l'invention prévoit un module de reconnaissance 12 capable de réceptionner les données d'entrée des utilisateurs, puis de déterminer si ces données d'entrée appartiennent à une "liste" de données d'entrée autorisées, mémorisées dans une mémoire auxiliaire 13 qui dans l'exemple illustré fait partie du module de reconnaissance 12. Lorsque la donnée d'entrée reçue appartient à la liste, le module de reconnaissance 12 l'adresse à un module d'apprentissage 16 qui sera décrit ci-après. Bien entendu, l'information transmise au module d'apprentissage 16 peut être une représentation de la donnée d'entrée reçue.

Le module d'apprentissage 16 est, tout comme les autres modules, un composant (ou circuit) électronique. A chaque fois qu'un utilisateur, après avoir fourni sa donnée d'entrée, actionne les touches de saisie 3, 4 pour sélectionner (ou saisir) ou modifier des paramètres de consigne, le module d'apprentissage 16 stocke dans une mémoire d'apprentissage 15, sous forme d'un multiplet, le jeu de paramètres de consigne saisi, le dernier jeu de paramètres physiques détectés, et la donnée d'entrée de l'utilisateur (ou bien une représentation de celle-ci).

Pour ce faire, le module d'apprentissage 16 reçoit les paramètres physiques détectés, soit directement des capteurs 8 et 9, soit du module de calcul 7 auquel il est connecté. Il connaît donc en permanence le dernier jeu de paramètres physiques détecté.

La mémoire d'apprentissage 15 comprend donc une multitude de multiplets, chaque multiplet comprenant un jeu de paramètres de consigne, sélectionné précédemment par un passager, associé à une donnée d'entrée de la liste, et le jeu de paramètres physiques détectés sensiblement au moment où le passager avait sélectionné son jeu de paramètres de consigne. Les multiplets ainsi mémorisés constituent donc l'historique des paramètres de consigne sélectionnés par les différents utilisateurs en réaction à l'aérothermie régnant dans et hors de l'habitacle, et par conséquent aux paramètres physiques externe et interne.

Bien entendu, la mémoire auxiliaire 13 et la mémoire d'apprentissage 15 peuvent ne constituer qu'une même mémoire, qui peut elle-même être une partie d'une mémoire comportant la mémoire 6. De même, comme cela est illustré sur la figure, le module de calcul, le module de reconnaissance, le module d'apprentissage, les différentes mémoires et éventuellement l'interface-utilisateur peuvent être intégrés dans un module électronique spécifique 17, comme par exemple un micro-contrôleur.

Lorsqu'un passager fournit une donnée d'entrée de la liste, le module de reconnaissance 12 adresse au module d'apprentissage 16 "l'information" (donnée d'entrée). Le module d'apprentissage va alors extraire de la mémoire d'apprentissage 15 le multiplet qui comprend à la fois la donnée d'entrée (ou information) et un jeu de paramètres physiques détectés sensiblement identique au dernier jeu de paramètres physiques détectés. Il adresse alors au module de calcul 7 le jeu de paramètres de consigne que comprend le multiplet qu'il vient d'extraire, de sorte que ledit module de calcul 7 puisse déterminer le jeu de réglages de l'installation qui correspond à la fois au dernier jeu de paramètres physiques détectés (Tint,Text) et au jeu de paramètres de consigne que lui a fourni le module d'apprentissage 16. Cette détermination s'effectue selon le mécanisme décrit précédemment.

Dans une variante de réalisation, le module d'apprentissage 16 peut être agencé pour extraire de la mémoire d'apprentissage 15 au moins un autre (second) multiplet comprenant la même donnée d'entrée que celle fournie et un jeu de paramètres physiques détectés comparable à celui du premier multiplet extrait. On entend ici par paramètres comparables des paramètres physiques dont les valeurs sont approximativement les mêmes, par exemple on considérera que des températures externes de 15°C et 17°C sont comparables. Cela revient à fixer des plages de tolérance pour chaque paramètre physique d'un jeu. Mais on peut envisager d'extraire plus de deux multiplets comparables, par exemple trois ou quatre.

Une fois les multiplets comparables extraits, le module d'apprentissage 16 effectue une moyenne de chaque paramètre de consigne qu'ils comprennent pour fournir au module de calcul 7 un jeu de paramètres de consigne moyens, à partir duquel pourra être déterminé le jeu de réglages de l'installation. Cela permet de tenir compte des éventuels ajustements de paramètres de consigne que 1'utilisateur/passager a effectué au cours du temps, pour des paramètres physiques identiques ou comparables.

Afin de ne pas prendre en compte des ajustements de paramètres de consigne trop anciens, on peut adapter le module d'apprentissage 16 de sorte qu'il mémorise chaque multiplet en correspondance d'une position temporelle qui représente son ordre chronologique de mémorisation par rapport aux multiplets comprenant la même donnée d'entrée que la sienne. Cela permet de classer chronologiquement sous forme de "sous-listes" les multiplets correspondant à des données d'entrée différentes. Cette information temporelle peut ne représenter qu'un classement de mémorisation, le dernier multiplet venant se positionner après l'avant dernier. Mais il peut également s'agir d'une datation.

Il est alors possible de n'extraire que des multiplets vérifiant un critère temporel, comme par exemple ceux possédant une position temporelle proche de celle du premier multiplet extrait. On entend ici par proche, des multiplets premiers ou seconds voisins d'un premier multiplet extrait dans une sous-liste ordonnée. Dans le cas de multiplets datés, on peut envisager de fixer une durée formant seuil au delà de laquelle les multiplets comparables ne peuvent plus être pris en considération. Cela permet de ne pas tenir compte des ajustements trop anciens.

Préférentiellement, le module d'apprentissage 16 forme un nouveau multiplet avec le dernier jeu de paramètres détectés, le jeu de paramètres de consigne moyens et la donnée d'entrée, afin de le mémoriser, et par conséquent de pouvoir en tenir compte lors des futures sollicitations.

Plusieurs modes de réalisation peuvent être envisagés pour le module de reconnaissance 12.

Ainsi, comme cela est illustré sur l'unique figure, on peut prévoir dans le boîtier de saisie 1 un organe d'identification 14, par exemple une touche digitale, permettant à un passager-utilisateur, en cas d'actionnement, de fournir au module de reconnaissance 12 la donnée d'entrée désignant le jeu de paramètres de consigne personnalisés de l'utilisateur. Lorsque l'organe d'identification 14 est réalisé sous la forme d'une touche digitale, capable, par exemple d'émettre une impulsion, une première pression (ou actionnement) de la touche suffit au module de reconnaissance pour identifier un premier utilisateur. De même un double actionnement identifie un second utilisateur, un triple actionnement identifie un troisième utilisateur, etc.

Dans une variante de ce mode de réalisation, au lieu d'un unique organe d'identification 14, on peut prévoir une multiplicité d'organes d'identification permettant respectivement d'identifier les utilisateurs, ou bien les jeux de paramètres de consigne personnalisés différents d'un unique utilisateur.

Ainsi, lorsque le module de reconnaissance 12 reçoit, par exemple, deux impulsions, il leur associe l'utilisateur numéro 2, ou bien le second mode de fonctionnement de l'unique utilisateur. Il n'a plus qu'à signaler l'information (donnée d'entrée) au module d'apprentissage 16.

D'autres modes de réalisation peuvent être envisagés pour le module de reconnaissance 12. Ainsi, il pourra être réalisé sous la forme d'un module de synthèse vocale capable, par exemple, de reconnaître plusieurs fréquences vocales. Dans un tel mode de réalisation, il est clair que l'on doit prévoir une phase d'enregistrement, par exemple d'un message particulier pour chaque utilisateur, de sorte que ledit module de reconnaissance 12 puisse mémoriser dans la mémoire auxiliaire 13 les différentes fréquences vocales de chaque utilisateur sous forme de message vocal.

Ainsi, il suffit à un utilisateur dont la fréquence vocale est mémorisée dans la mémoire auxiliaire 13, de prononcer le message, distinctement, pour que le module de reconnaissance 12, d'une part, identifie, par comparaison, sa fréquence vocale à l'une de celles qui se trouvent mémorisées dans la mémoire auxiliaire 13, et d'autre part, détermine le jeu de paramètres de consigne personnalisés correspondant. Dans ce mode de réalisation le message vocal forme la donnée d'entrée.

Dans un autre mode de réalisation, le module de reconnaissance 12 peut comporter des organes de saisie permettant à un passager-utilisateur de composer un code personnel alphanumérique formant la donnée d'entrée. Dans ce mode de réalisation, on peut par exemple utiliser comme organes de saisie (lorsque le dispositif en est équipé), les touches digitales du démarreur électronique à codes du véhicule. Il est clair que dans cette variante chaque code-utilisateur doit permettre la mise en fonctionnement du véhicule.

Par ailleurs, tout comme dans le mode dit à synthèse vocale, une étape de mémorisation préalable des codes alphanumériques de chaque utilisateur doit être effectuée. Il faudra donc envisager pour ces modes de réalisation des moyens permettant la mémorisation des données d'entrée dans la mémoire auxiliaire 13.

Ici, à réception du code confidentiel de l'utilisateur, le module de reconnaissance 12 effectue une comparaison avec les codes stockés dans la mémoire auxiliaire 13 (données d'entrée de la liste), et adresse, en cas d'identité, la donnée d'entrée représentant le code au module d'apprentissage 16.

Dans encore un autre mode de réalisation, le module de reconnaissance 12 peut être réalisé sous la forme d'un module de reconnaissance de formes de clés de contact du véhicule. Ce mode de réalisation nécessite que les différentes clés de mise en fonctionnement du véhicule présentent des différences minimes détectables par le module de reconnaissance 12, par exemple grâce à des contacteurs implantés à l'intérieur du logement de clé de contact.

Ici, tout comme dans le premier mode de réalisation à saisie par touche, il n'est pas nécessaire d'enseigner un code ou un message particulier au module de reconnaissance 12. Le seul fait d'introduire la clé de contact dans son logement assure automatiquement la reconnaissance de la forme de la clé, laquelle forme constitue la donnée d'entrée. Cette reconnaissance peut s'effectuer grâce à un circuit à contacteurs raccordé au module de reconnaissance 12.

Dans tous ces modes de réalisation, on prévoit, de préférence, lors de l'assemblage du véhicule, un jeu de paramètres de consigne par défaut, pour chaque utilisateur potentiel. Ces multiplets par défaut, mémorisés dans la mémoire d'apprentissage 15, pourront contenir des jeux de paramètres de consigne identiques, ou bien différents.

L'invention ne se limite pas aux modes de réalisation décrits ci-avant, mais elle englobe toutes les variantes que pourra développer l'homme de l'art dans le cadre des revendications ci-après.

Ainsi, le nombre de capteurs pourra être notablement supérieur à celui illustré sur la figure unique.

Enfin, les organes de saisie de paramètres aérothermiques de consigne et de mise en fonctionnement de l'installation pourront être différents des touches digitales décrites ci-avant. Il pourra s'agir notamment de boutons rotatifs, ou bien de curseurs à déplacement linéaire.

## Revendications

1. Dispositif de commande d'une installation de climatisation d'un véhicule automobile, du type comprenant :
- des moyens de détection (8,9) de jeux de paramètres physiques (Tint,Text),
- des moyens de saisie (3-5) permettant à un passager de sélectionner des jeux de paramètres aérothermiques de consigne à l'intérieur de l'habitacle (TCint),
- un module de calcul (7) propre à déterminer, à partir d'un jeu de paramètres physiques détectés (Tint,Text) et d'un jeu de paramètres de consigne (TCint), un jeu de réglages de l'installation,
- une interface-installation (10) pour instaurer un tel jeu de réglages, et
- des moyens de reconnaissance propres à recevoir une donnée d'entrée fournie par un passager en vue de déterminer si ladite donnée appartient à une liste mémorisée,
**caractérisé en ce qu'**il comprend un module d'apprentissage (16) propre, en cas d'une telle appartenance et d'une sélection par ledit passager d'un jeu de paramètres de consigne, à stocker dans une mémoire d'apprentissage (15), sous forme d'un multiplet, le dernier jeu de paramètres physiques détectés, ladite donnée d'entrée fournie et ledit jeu de paramètres de consigne sélectionné.

2. Dispositif selon la revendication 1, **caractérisé en ce que** le module d'apprentissage (16) est propre, en cas de fourniture par un passager d'une donnée d'entrée appartenant à la liste, à extraire de la mémoire d'apprentissage (15) au moins un premier multiplet comprenant ladite donnée d'entrée et un jeu de paramètres physiques détectés sensiblement identique au dernier jeu de paramètres physiques détectés, pour fournir au module de calcul (7) le jeu de paramètres de consigne compris dans ce premier multiplet extrait, de sorte que ledit module de calcul (7) détermine le jeu de réglages correspondant au jeu de paramètres physiques détectés (Tint,Text) et au jeu de paramètres de consigne sélectionnés par le module d'apprentissage (16).

3. Dispositif selon la revendication 2, **caractérisé en ce que** le module d'apprentissage (16) est agencé pour extraire de la mémoire d'apprentissage (15) au moins un second multiplet comprenant la donnée d'entrée fournie et un jeu de paramètres physiques détectés comparable à celui du premier multiplet extrait, puis à déterminer un jeu de paramètres de consigne moyens à partir des jeux de paramètres de consigne des multiplets extraits, pour fournir au module de calcul (7) ledit jeu de paramètres de consigne moyens, de sorte que ledit module de calcul (7) détermine le jeu de réglages correspondant au jeu de paramètres physiques détectés (Tint,Text) et audit jeu de paramètres de consigne moyens.

4. Dispositif selon l'une des revendications 1 à 3, **caractérisé en ce que** chaque multiplet est mémorisé, dans la mémoire d'apprentissage (15) en correspondance d'une position temporelle représentative de son instant de mémorisation par rapport aux autres multiplets comprenant la même donnée d'entrée que la sienne.

5. Dispositif selon la combinaison des revendications 3 et 4, **caractérisé en ce que** le second multiplet extrait possède une position temporelle proche de celle du premier multiplet extrait.

6. Dispositif selon l'une des revendications 3 à 5, **caractérisé en ce que** le module d'apprentissage (16) est agencé pour mémoriser sous forme d'un multiplet, dans la mémoire d'apprentissage (15), la donnée d'entrée fournie, le dernier jeu de paramètres physiques détectés et le jeu de paramètres de consigne moyens.

7. Dispositif selon l'une des revendications 1 à 6, **caractérisé en ce que** les jeux de paramètres aérothermiques de consigne comprennent au moins la température (TCint) à l'intérieur de l'habitacle (H).

8. Dispositif selon la revendication 7, **caractérisé en ce que** les jeux de paramètres aérothermiques de consigne comprennent au moins la température (TCint) et le mode de distribution d'air (MD) à l'intérieur de l'habitacle (H).

9. Dispositif selon l'une des revendications précédentes, **caractérisé en ce que** les moyens de reconnaissance (12) comprennent au moins un organe de saisie-identification (14), de type touche de contact, propre à permettre à un passager de fournir sa donnée d'entrée.

10. Dispositif selon la revendication 9, **caractérisé en ce que** l'organe de saisie (14) est du type à émission d'impulsion par pression, des nombres de pressions successives différents correspondant à des données d'entrée différentes.

11. Dispositif selon la revendication 9, **caractérisé en ce que** les moyens de reconnaissance (12) comprennent une multiplicité d'organes de saisie-identification personnalisés, associés chacun à une donnée d'entrée différente, de type touche de contact, l'actionnement d'un organe fournissant au module de reconnaissance la donnée d'entrée correspondante.

12. Dispositif selon l'une des revendications 1 à 8, **caractérisé en ce que** les moyens de reconnaissance (12) comprennent un module de détection propre à reconnaître plusieurs formes de clés différentes associées chacune à des données d'entrée différentes, lesdites formes formant message d'entrée.

13. Dispositif selon l'une des revendications 1 à 8, **caractérisé en ce que** les moyens de reconnaissance (12) comprennent un module de détection de fréquences vocales propre à mémoriser un message vocal selon au moins deux fréquences vocales différentes de passagers, associées à des données d'entrée différentes, et à comparer audit message vocal stocké tout message vocal détecté de façon à déterminer si ledit message détecté a été émis selon l'une des fréquences vocales mémorisées et est identique audit message stocké, un tel message vocal détecté formant donnée d'entrée.

14. Dispositif selon l'une des revendications 1 à 8, **caractérisé en ce que** les moyens de reconnaissance (12) comprennent un module de détection de codes comprenant des organes de saisie pour permettre la mémorisation d'au moins deux codes différents, associés à des données d'entrée différentes, et la saisie par un passager d'un code personnel, et déterminer si ledit code saisi est identique à l'un desdits codes stockés, un tel code saisi formant message d'entrée.

15. Dispositif selon l'une des revendications précédentes, **caractérisé en ce qu'**avant une première mise en fonctionnement de l'installation, la mémoire d'apprentissage (15) stocke des multiplets dits "par défaut", en nombre égal au nombre de données d'entrée différentes que peut contenir la liste.

## Claims

1. Device for controlling a motor vehicle air conditioning installation, of the type comprising:
- means (8, 9) of detecting sets of physical parameters (Tint, Text),
- entry means (3-5) enabling a passenger to select sets of set thermal ventilation parameters inside the cabin (TCint),
- a calculation module (7) able to determine, from a set of detected physical parameters (Tint, Text) and a set of set parameters (TCint), a set of settings for the installation,
- an installation interface (10) for establishing such a set of settings, and
- recognition means able to receive an input data item supplied by a passenger with a view to determining whether the said data item belongs to a stored list,
**characterised in that** it comprises a learning module (16), able, in the event of such a belonging and a selection by the said passenger of a set of set parameters, to store, in a learning memory (15), in the form of a multiplet, the last set of physical parameters detected, the said input data item supplied and the said set of set parameters selected.

2. Device according to Claim 1, **characterised in that** the learning module (16) is able, in the event of the supply by a passenger of an input data item belonging to the list, to extract from the learning memory (15) at least a first multiplet comprising the said input data item and a set of detected physical parameters substantially identical to the last set of physical parameters detected, in order to supply to the calculation module (7) the set of set parameters included in this first multiplet extracted, so that the said calculation module (7) determines the set of settings corresponding to the set of physical parameters detected (Tint, Text) and to the set of set parameters selected by the learning module (16).

3. Device according to Claim 2, **characterised in that** the learning module (16) is arranged to extract from the learning memory (15) at least a second multiplet comprising the input data item supplied and a set of physical parameters detected comparable to that of the first multiplet extracted, and then to determine a set of average set parameters from the sets of set parameters of the extracted multiplets, in order to supply the said set of average set parameters to the calculation module (7), so that the said calculation module (7) determines the set of settings corresponding to the set of physical parameters detected (Tint, Text) and to the said set of average set parameters.

4. Device according to one of Claims 1 to 3, **characterised in that** each multiplet is stored in the learning memory (15) in correspondence with a temporal position representing its storage time with respect to the other multiplets comprising the same input data item as its own.

5. Device according to the combination of Claims 3 and 4, **characterised in that** the second multiplet extracted has a temporal position close to that of the first multiplet extracted.

6. Device according to one of Claims 3 to 5, **characterised in that** the learning module (16) is arranged to store, in the form of a multiplet, in the learning memory (15), the input data item supplied, the last set of physical parameters detected and the set of average set parameters.

7. Device according to one of Claims 1 to 16, **characterised in that** the set of set thermal ventilation parameters comprise at least the temperature (TCint) inside the cabin (H).

8. Device according to Claim 7, **characterised in that** the sets of set thermal ventilation parameters comprise at least the temperature (TCint) and the air distribution mode (MD) inside the cabin (H)>

9. Device according to one of the preceding claims, **characterised in that** the recognition means (12) comprise at least one entry-identification device (14) of the contact key type, suitable for enabling a passenger to supply his input data item.

10. Device according to Claim 9, **characterised in that** the entry device (14) is of the type with pulse emission by pressure, different numbers of successive presses corresponding to different input data.

11. Device according to Claim 9, **characterised in that** the recognition means (12) comprise a multiplicity of personalised entry-identification devices, each associated with a different input data item, of the contact key type, the actuation of a device supplying the corresponding input data item to the recognition module.

12. Device according to one of Claims 1 to 8, **characterised in that** the recognition means (12) comprise a detection module able to recognise several different forms of keys each associated with different input data, the said forms forming an input message.

13. Device according to one of Claims 1 to 8, **characterised in that** the recognition means (12) comprise a voice frequency detection module able to store a voice message according to at least two different passenger voice frequencies, associated with different input data, and comparing any voice message detected with the said stored voice message so as to determine whether the said detected message has been emitted at one of the stored voice frequencies and is identical to the said stored message, such a detected voice message forming an input data item.

14. Device according to one of Claims 1 to 8, **characterised in that** the recognition means (12) comprise a code detection module comprising entry devices for allowing the storage of at least two different codes, associated with different input data, and the entry of a personal code by a passenger, and determining whether the said entered code is identical to one of the said stored codes, such an entered code forming an input message.

15. Device according to one of the preceding claims, **characterised in that**, before a first commissioning of the installation, the learning memory (15) stores so-called "default" multiplets, equal in number to the number of different input data which can contain the list.

## Patentansprüche

1. Steuereinrichtung einer Kraftfahrzeugklimaanlage, vom Typ, umfassend:
- Erfassungsmittel (8,9) für Sätze an physikalischen Parametern (Tint, Text),
- Eingabemittel (3-5), die es einem Insassen ermöglichen, Sätze an aerothermischen Sollparametern im Inneren des Innenraumes (TCint) auszuwählen,
- ein Berechnungsmodul (7), welches geeignet ist, ausgehend von einem Satz an erfaßten physikalischen Parametern (Tint, Text) und einem Satz an Sollparametern (TCint), einen Satz an Einstellungen der Anlage zu bestimmen,
- eine Anlagenschnittstelle (10), um solch einen Satz an Einstellungen zu bewirken, und
- eine Ereknnungseinrichtung, geeignet zum Empfangen von durch einen Insassen bereitgestellten Eingangsdaten, angesichts der Bestimmung, ob die Daten zu einer gespeicherten Liste gehören, **dadurch gekennzeichnet, daß** die Einrichtung ein Lernmodul oder ein lernfähiges Modul (16) umfaßt, geeignet, im Falle solch einer Zugehörigkeit und einer Auswahl durch den Insassen eines Satzes an Sollparametern, in einem lernfähigen oder Lernspeicher (15) in der Form eines Mulitplets den letzten Satz an erfaßten physikalischen Parametern, die bereitgestellten Eingangsdaten und den Satz an ausgewählten Sollparametern zu speichern.

2. Einrichtung nach Anspruch 1, **dadurch gekennzeichnet, daß** das Lernmodul (16) in der Lage ist, im Fall der Bereitstellung von Eingangsdaten durch einen Insassen, die zu der Liste gehören, aus dem Lernspeicher (15) zumindest ein erstes Multiplet zu extrahieren, umfassend die Eingangsdaten und einen Satz an erfaßten physikalischen Parametern, im wesentlichen identisch zu dem letzten Satz an erfaßten physikalischen Parametern, um dem Berechnungsmodul (7) den Satz an Sollparametern bereitzustellen, enthalten in dem ersten extrahierten Multiplet, so daß das Berechnungsmodul (7) den Satz an Einstellungen bestimmt, der dem Satz an erfaßten physikalischen Parametern (Tint, Text) und dem Satz an durch das Lernmodul (16) ausgewählten Sollparametern entspricht.

3. Einrichtung nach Anspruch 2, **dadurch gekennzeichnet, daß** das Lernmodul oder das lernfahige Modul (16) ausgebildet ist zum Extrahieren aus dem lernfähigen oder Lernspeicher (15) von zumindest einem zweiten Multiplet, umfassend bereitgestellte Eingangsdaten und einen Satz an erfaßten physikalischen Parametern, vergleichbar zu demjenigen des zuerst extrahierten Multiplets, sowie zur anschließenden Bestimmung eines Satzes an mittleren oder gemittelten Sollparametern, ausgehend von den Sollparametersätzen der extrahierten Multiplets, um dem Berechnungsmodul (7) den Satz an mittleren oder gemittelten Sollparametern bereitzustellen, so daß das Berechnungsmodul (7) den Satz an Einstellungen bestimmt, der dem Satz an erfaßten physikalischen Parametern (Tint, Text) und dem Satz an mittleren oder gemittelten Sollparametern entspricht.

4. Einrichtung nach einem der Ansprüche 1 bis 3, **dadurch gekennzeichnet, daß** jedes Multiplet gespeichert wird in dem Lernspeicher oder lernfähigen Speicher (15) in Entsprechung einer zeitlichen Position, repräsentativ für den Zeitpunkt der Speicherung mit Bezug auf andere Multiplets, die dieselben oder entsprechende Eingangsdaten diesbezüglich umfassen.

5. Einrichtung gemäß einer Kombination der Ansprüche 3 und 4, **dadurch gekennzeichnet, daß** das zweite extrahierte Multiplet über eine zeitmäßige Position nahe zu jener des ersten extrahierten Multiplets verfügt.

6. Einrichtung nach einem der Ansprüche 3 bis 5, **dadurch gekennzeichnet, daß** das Lernmodul oder lernfähige Modul (16) ausgebildet ist zur Speicherung, in Form eines Multiplets, in dem Lern- oder lernfähigen Speicher (15) der bereitgestellten Eingangsdaten, des letzten Satzes an erfaßten physikalischen Parametern und des Satzes an mittleren oder gemittelten Sollparametern.

7. Einrichtung nach einem der Ansprüche 1 bis 6, **dadurch gekennzeichnet, daß** die Sätze an aerothermischen Sollparametern zumindest die Temperatur (TCint) im Inneren des Innenraumes (H) umfassen.

8. Einrichtung nach Anspruch 7, **dadurch gekennzeichnet, daß** die Sätze an aerothermischen Sollparametern zumindest die Temperatur (TCint) und den Luftverteilungsmodus (MD) im Inneren des Innenraumes (H) umfassen.

9. Einrichtung nach einem der vorangegangenen Ansprüche, **dadurch gekennzeichnet, daß** die Erkennungsmittel (12) zumindest ein Eingabeidentifikationselement (14) vom Tastschaltertyp umfassen, geeignet, um es einem Insassen zu ermöglichen, Eingangsdaten bereitzustellen.

10. Einrichtung nach Anspruch 9, **dadurch gekennzeichnet, daß** das Eingabeelement (14) vom Impulsgeber-durch-Druck-Typ ist, wobei unterschiedliche sukzessive Anzahlen an Druckbetätigungen unterschiedlichen Eingangsdaten entsprechen.

11. Einrichtung nach Anspruch 9, **dadurch gekennzeichnet, daß** die Erkennungsmittel (12) eine Vielzahl von personalisierten Eingabeidentifikationselementen umfassen, jeweils zugeordnet unterschiedlichen Eingangsdaten, und zwar vom Berührungs- oder Kontakt-bzw. Tastschaltertyp, wobei die Betätigung eines Elementes dem Erkennungsmodul entsprechende Eingangsdaten bereitstellt.

12. Einrichtung nach einem der Ansprüche 1 bis 8, **dadurch gekennzeichnet, daß** die Erkennungsmittel (12) ein Erfassungsmodul umfassen, geeignet zum Erkennen mehrerer unterschiedlicher Schlüsselformen, jeweils zugeordnet unterschiedlichen Eingangsdaten, wobei die Formen Eingangsnachrichten darstellen.

13. Einrichtung nach einem der Ansprüche 1 bis 8, **dadurch gekennzeichnet, daß** die Erkennungsmittel (12) ein Sprachfrequenzerfassungsmodul umfassen, geeignet zur Speicherung einer Sprachnachricht, entsprechend zumindest zwei unterschiedlichen Vokalfrequenzen von Insassen, zugeordnet zu unterschiedlichen Eingangsdaten, sowie zum Vergleichen der gespeicherten Sprachnachricht mit jeglicher erfaßten Sprachnachricht, um zu bestimmen, ob die erfaßte Nachricht emittiert wurde entsprechend einer der gespeicherten Vokal- oder Sprachfrequenzen und identisch ist zu der gespeicherten Nachricht, wobei solch eine erfaßte Sprachnachricht Eingangsdaten bildet.

14. Einrichtung nach einem der Ansprüche 1 bis 8, **dadurch gekennzeichnet, daß** die Erkennungsmittel (12) ein Erfassungsmodul für Codes umfassen, umfassend Eingabeelemente, um die Speicherung von zumindest zwei unterschiedlichen Codes zu ermöglichen, zugeordnet zu unterschiedlichen Eingangsdaten, sowie der Eingabe durch einen Insassen eines persönlichen Codes, sowie zur Bestimmung, ob der eingegebene Code identisch ist zu einem der gespeicherten Codes, wobei solch ein Eingabecode eine Eingangsnachricht bildet.

15. Einrichtung nach einem der vorangegangenen Ansprüche, **dadurch gekennzeichnet, daß** vor einer ersten Inbetriebnahme der Anlage der Lernspeicher bzw. der lemfähige Speicher (15) sogenannte _{"}Default" oder "Standard"-Multiplets gespeichert hat, bei einer Anzahl gleich zur Anzahl an unterschiedlichen Eingangsdaten, die die Liste enthalten kann.
